# EUROPEAN PATENT APPLICATION

(11) **EP 1 039 320 A1**
(43) Date of publication of application: **27.09.2000**
(21) Application number: 00104073.2
(22) Date of filing: 28.02.2000
(51) Int. Cl.: G02B 6/38

(54) **A device for connecting two optical fibres with each other**

(30) Priority: 19.03.1999 SE 9901016
(71) Applicant: Formex AB, 334 33 Anderstorp (SE)
(72) Inventor: Földi, Peter, 330 12 Forsheda (SE)
(74) Representative: Linde, Leif

(57) **Abstract**

A device for connecting two optical fibres (2, 4) with each other comprises two fibre retainers (6, 9) and two coupling elements (18, 20). The optical fibres are fixed in the fibre retainers with the end surface (46, 48) of the optical fibres positioned at an end connection surface (42, 44) of the fibre retainers. The fibre retainers (6, 8) and the optical fibres fixed therein are positioned with end connection surfaces (42, 44) positioned at connection surfaces (30, 32) of the coupling elements. The coupling elements are adapted to be connected with each other having their connection surfaces facing each other in a position in which the end connection surfaces of the fibre retainers and thereby the end surfaces of the optical fibres are connected with each other for connecting the optical fibres. The fibre retainers (6, 8) are positioned in the coupling elements (18, 20) so that the end connection surfaces (42, 44) of the fibre retainers are prior to the connection of the coupling elements with each other positioned flush with or somewhat projecting in relation to the connection surfaces (30, 32) of the coupling elements.

## Description

The present invention relates to a device for connecting two optical fibres with each other.

In fibre optical systems there are at different locations required optical connections between the optical fibres included in the system. Each connection must be established while using very great accuracy if the losses shall be kept at a minimum. Of course, the problem of providing a correct connection is emphasized by the fact that the optical fibres have a very small cross-sectional area and that also small deviations from a correct position between two fibre end portions which shall be connected with each other cause substantial losses. Different devices for providing a correct connection of optical fibres with each other have been suggested. Previously known devices comprise lenses in which the light beam is magnified so that the light transmission in the connection takes place at a sectional area which is magnified several times providing for a corresponding reduction of the sensitivity to deviations from a correct position. It is thereby a drawback that there is required three connections instead of one single connection for connecting two fibre end portions with each other. In order to avoid this drawback it is also previously known to use devices in which the optical fibres are directly connected with each other. A previously known device of this kind comprises two fibre retainers in which each of the optical fibres is fixed with the end surface of the optical fibre positioned at an end connection surface of the fibre retainer and two connector element in which each of the fibre retainers with the optical fibre fixed therein is positioned with the connection surface positioned at a connection surface of the coupling element. The two coupling elements are adapted to be connected with each other in a position in which the end connection surfaces of the fibre retainers and thereby the end surfaces of the optical fibres are connected with each other for connecting the optical fibres together. A drawback of the previously known devices of this kind is that they in connection with the fibre end portions present cavities and/or recesses in which dirt is collected and present cleaning problems which of course provides for a decreased light transmission in the connection between the two optical fibres.

The object of the invention is to provide an improved device for connecting two optical fibres with each other and this object is complied with by the fact that the fibre retainers are in a device of the kind mentioned above received in their coupling element so that the end connection surfaces of the fibre retainers are prior to the connection of the coupling elements with each other positioned in plane with or somewhat projecting in relation to the connection surface of the coupling element. This prevents that there is in the device according to the invention collected dirt at the end surfaces of the optical fibres which facilitates cleaning and in turn provides for an efficient light transmission in the connection between the optical fibres.

It is suitable that the fibre retainers are positioned in recesses in the coupling elements and that the surfaces defining the recesses and the external surfaces of the fibre retainers are at least in connection with the connection surfaces of the coupling elements in engagement with each other.

It is suitable that at least one of the fibre retainers is spring-loaded towards its position in plane with or somewhat projecting in relation to its connection surface of its coupling element. As an alternative only one fibre retainer can be fixed in its coupling element and is only the other fibre retainer spring-loaded towards said position. It is suitable that the fibre retainers project 0,05 - 0,3 mm in relation to its connection surface of its connection element. The end connection surfaces of the fibre retainers can be designed in different ways, for example as spherical surfaces or as flat surfaces in which the flat surfaces are subsequently to the connection of the coupling elements with each other contacting each other over their complete area and are parallel or form a small angle, for example 8°, in relation to the connection surfaces of the coupling elements.

It is suitable that the fibre retainers consist of cylindrical elements, preferably consisting of ceramic material. At the central portions of the elements the end portions of the optical fibres are received and form the end connection surfaces of the fibre retainers. At the opposite end portions in relation to the end connection surfaces there is a sleeve-shaped element through which the optical fibres extend from the end portions of the optical fibres. The coupling elements have position determination means so that the end surfaces of the optical fibres are connected with each other in a correct position when the coupling elements are connected with each other. These position determination means can be constituted by guiding pins and complementary recesses.

The invention shall in the following be described with reference to the accompanying drawings.
Fig. 1 is an axial section of an embodiment of a device for connecting two optical fibres with each other prior to the connection of the coupling elements included in the device.
Fig. 2 is an axial section corresponding to Fig. 1 of the device subsequently to the connection of the coupling elements with each other.
Figs 3 and 4 show axial sections of the end portions facing each other of the coupling elements according to the invention included in the device, the end portions having different designs with regard to the end portions of the fibre retainers included in the device.

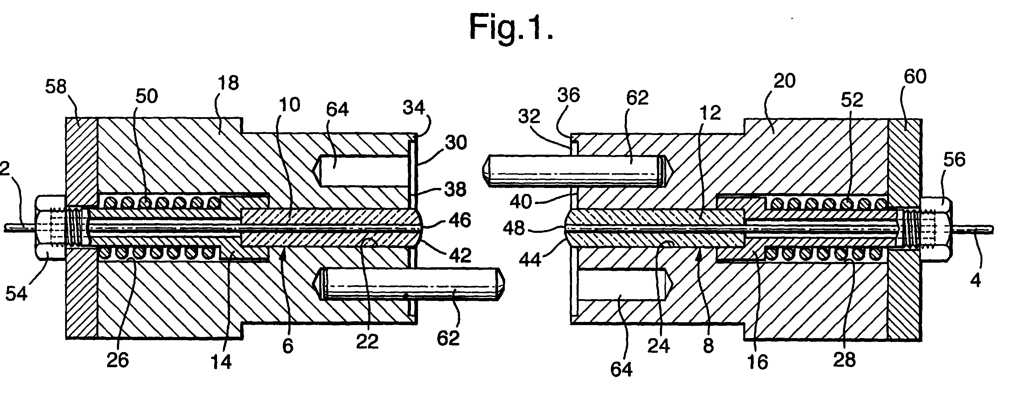

The device according to the invention shown in Fig. 1 is intended for connecting two optical fibres 2 and 4 with each other. The end portions of the optical fibres 2 and 4 are fixed in fibre retainers 6 and 8, so called ferrules, each consisting of a cylindrical element 10 and 12, respectively, consisting of a ceramic material and a sleeve-shaped element 14 and 16, respectively. The elements 10 and 12 consisting of ceramic material are connected with the sleeve-shaped elements 14 and 16 by the fact that end portions of the elements 10 and 12 are received in the sleeve-shaped elements 14 and 16, respectively. The fibre retainers 6 and 8 are received in cylindrical openings in the coupling elements 18 and 20, said cylindrical openings consisting of portions 22 and 24 having a smaller diameter in which the elements 10 and 12 consisting of ceramic material are received and portions 26 and 28 of larger diameter in which the sleeve-shaped elements 14 and 16 are received. The diameters of the portions 22 and 24 are in agreement with the diameters of the elements 10 and 12 consisting of ceramic material so that the outer surfaces of the elements 10 and 12 engage the surfaces defining the portions 22 and 24.

The coupling elements 18 and 20 form connection surfaces 30 and 32 facing each other and being displaced into an engagement position opposite to each other when the optical fibres 2 and 4 are connected with each other by means of the connection elements 18 and 20. The connection surfaces 30 and 32 consist of peripherally extending edge surfaces 34 and 36 and depressed surface portions 38 and 40 positioned inside the edge surfaces.

The elements 10 and 12 consisting of ceramic material form end connection surfaces 42 and 44, and in the planes thereof the end surfaces 46 and 48 of the optical fibres 2 and 4 are positioned. The end connection surfaces 42 and 44 of the fibre retainers 6 and 8 are prior to the connection of the coupling elements 18 and 20 with each other positioned somewhat projecting in relation to its connection surfaces 30 and 32 of the coupling elements 18 and 20, respectively. Thereby there are no cavities or recesses of the kind which are present at previously known devices and in which dirt can be collected. Such collection of dirt provides for a bad optical connection with the optical fibres 2 and 4 when the coupling elements 18 and 20 are connected with each other. The fibre retainers 6 and 8 are prior to the connection of the coupling elements 18 and 20 in said projecting position by means of pressure springs 50 and 52 which are tensioned between an annular surface of the sleeve-shaped elements 14 and 16, respectively, and connected with the coupling elements 18 and 20 by means of washers 58 and 60 fastened by means of bolts 54 and 56.

In the embodiment of the device according to the invention shown in Fig. 1 the end connection surfaces 42 and 44 of the fibre retainers 6 and 8 and the end surfaces 46 and 48 of the optical fibres are of spherical design.

In order to position the coupling elements 18 and 20 in a correct way in relation to each other so that the end surfaces 46 and 48 of the optical fibres 2 and 4 take a correct position opposite to each other the coupling elements 18 and 20 are provided with guiding pins 62 and complementary recesses 64.

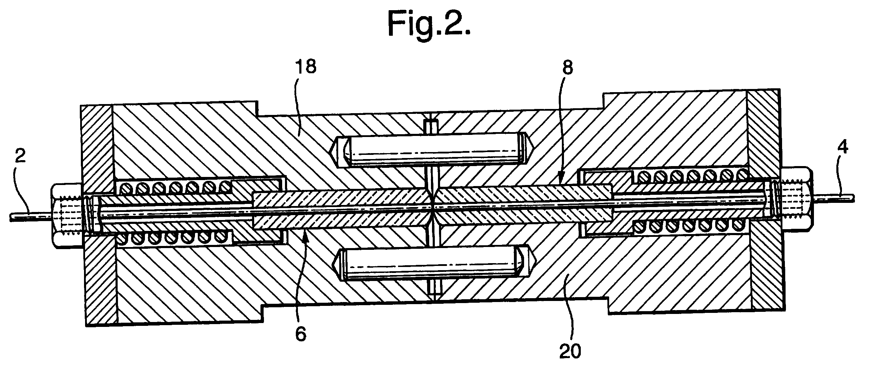

In Fig. 2 the device according to the invention is shown subsequently to the connection of the coupling elements 18 and 20 with each other. In the position of Fig. 2 the peripheral edge surfaces 34 and 36 of the coupling elements 18 and 20 contact each other while the end connection surfaces 42 and 44 of the fibre retainers 6 and 8 and thereby the end surfaces 46 and 48 of the optical fibres 2 and 4 engage each other while being forced towards each other by means of the pressure springs 50 and 52. The coupling elements 18 and 20 are defined with regard to their positions by means of the guiding pins 62 and the recesses 64 so that the end surfaces 46 and 48 of the optical fibres take an exact correct position opposite to each other. The coupling elements 18 and 20 are maintained in their connected position by means of a covering, not shown, the portions of which are connected with each other by means of a thread or a bayonet connection.

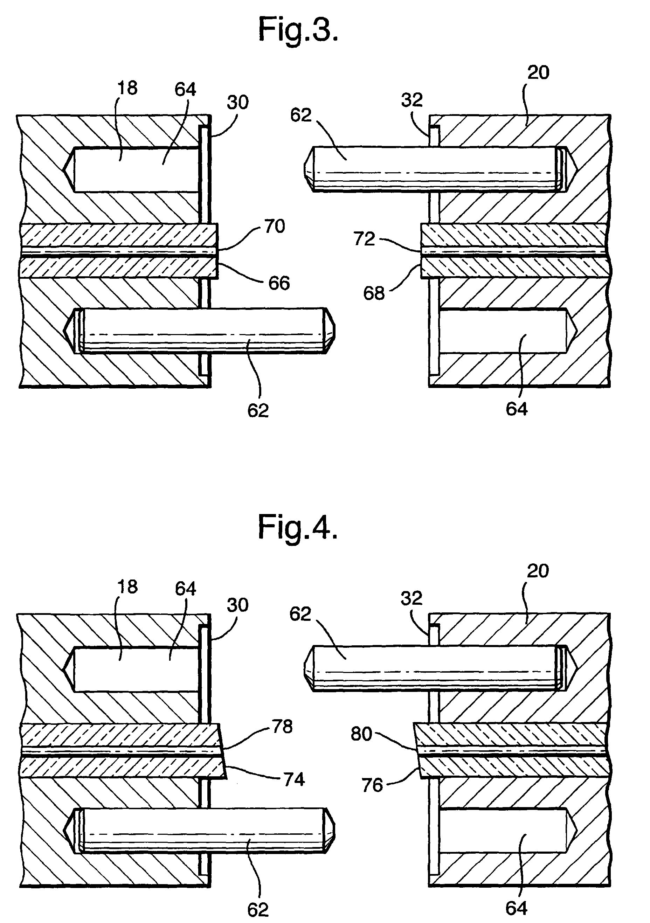

In the embodiment according to Fig. 3 the end connection surfaces 66 and 68 of the fibre retainers 6 and 8 and the end surfaces of the optical fibres 2 and 4 are flat and parallel with the connection surfaces 30 and 32 of the coupling elements 18 and 20.

In the embodiment according to Fig. 4 the end connection surfaces 74 and 76 of the fibre retainers and the end surfaces 78 and 80 of the optical fibres are flat but inclined about 8° in relation to the connection surfaces 30 and 32 of the coupling elements 18 and 20. This inclination of said surfaces reduces the risk of the establishment of reflection in the transmission direction at the connection between the end surfaces 78 and 80 of the optical fibres.

The invention can be modified within the scope of the following claims.

## Claims

1. A device for connecting two optical fibres (2, 4) with each other, comprising two fibre retainers (6, 8) in which the optical fibres are fixed with the end surfaces (46, 48; 70, 72; 78, 80) of the optical fibres positioned at an end connection surface (42, 44; 66, 68; 74, 76) of the fibre retainers as well as two coupling elements (18, 20) in which the fibre retainers with the optical fibres fixed therein are positioned with the end connection surfaces positioned at connection surfaces (30, 32) of the coupling elements, the coupling elements being adapted to be connected with each other in a position in which the end connection surfaces of the fibre retainers and thereby the end surfaces of the optical fibres are connected with each other for connecting the optical fibres, **characterized** in that the fibre retainers (6, 8) are positioned in their coupling elements (18, 20) so that the end connection surfaces (42, 44; 66, 68; 74, 76) of the fibre retainers are prior to the connection of the connection elements with each other positioned flush with or somewhat projecting in relation to their connection surfaces (30, 32) of the coupling elements.

2. A device as claimed in claim 1, **characterized** in that the fibre retainers (6, 9) are positioned in recesses (22, 26, 24, 28) in the coupling elements (18, 20) and that the surfaces defining the recesses and the outer surfaces of the fibre retainers contact each other at least in connection with the connection surfaces (30, 32) of the coupling elements.

3. A device as claimed in claim 1 or 2, **characterized** in that at least one of the fibre retainers (6, 8) is spring-loaded against its position flush with or somewhat projecting in relation to its connection surface (30, 32) of the coupling element (18, 20).

4. A device as claimed in any of the preceding claims, **characterized** in that one of the fibre retainers is fixed in its coupling element and that the other fibre retainer is spring-loaded against its position flush with or somewhat projecting in relation to the connection surface of the coupling element.

5. A device as claimed in any of the preceding claims, **characterized** in that one of the fibre retainers or both of the fibre retainers (6, 8) project 0,05 - 0,3 mm in relation to its connection surface (30, 32) on the coupling element (18, 20).

6. A device as claimed in any of the preceding claims, **characterized** in that the end connection surfaces (42, 44) of the fibre retainers (6, 8) and the end surfaces (46, 48) of the fibres constitute spherical surfaces.

7. A device as claimed in any of claims 1-5, **characterized** in that the end connection surfaces (66, 68; 74, 76) of the fibre retainers and the end surfaces (70, 72; 78, 80) of the fibres form flat surfaces which subsequently to the connection of the coupling elements (18, 20) with each other contact each other over substantially their whole areas and that the flat surfaces of the fibre retainers are parallel with or form a small angle, for example 8°, in relation to the connection surfaces of the coupling elements.

8. A device as claimed in any of the preceding claims, **characterized** in that the fibre retainers (6, 8) consist of cylindrical elements (10, 12) preferably consisting of a ceramic material, the elements receiving the end portions of the optical fibres (2, 4) at their central parts and forming the end connection surfaces of the fibre retainers as well as a sleeve-shaped element (14,16) connected with the opposite end portion of the cylindrical elements in relation to the end connection surfaces, the optical fibre extending from the end portion of the optical fibres through said sleeve-shaped element.

9. A device as claimed in claim 8, **characterized** in that the sleeve-shaped element (14, 16) forms an engagement surface for a pressure spring (50, 52) tensioned between an engagement surface of the sleeve-shaped element and an opposite surface of the coupling element (18, 20).

10. A device as claimed in any of the preceding claims, **characterized** in that the coupling elements (18, 20) comprises position defining means (62, 64) for defining the position of the coupling elements when these are connected with each other to a position in which the end connection surfaces (42, 44; 66, 68; 74, 76) of the fibre retainers (6, 8) and thereby the end surfaces (46, 48; 70, 72; 78, 80) of the optical fibres are connected with each other for connecting the optical fibres (2, 4).

11. A device as claimed in claim 10, **characterized** in that the position defining means are constituted by guiding pins (62) and complementary recesses (64).

12. A device as claimed in any of the preceding claims, **characterized** in that the connection surfaces (30, 32) of the coupling elements facing each other when the coupling elements (18, 20) are connected with each other constitute engaging, peripherally extending edge surfaces (34, 36), enclosing facing surfaces (38, 40) positioned at a distance from each other.
